# EUROPEAN PATENT SPECIFICATION

(11) **EP 3 931 423 B1**
(45) Date of publication and mention of the grant of the patent: **08.01.2025**
(21) Application number: 20762547.6
(22) Date of filing: 25.02.2020
(51) Int. Cl.: E21B 41/00, G06F 30/20

(54) **SYSTEM AND ARCHITECTURE FOR COMPARING AND SELECTING A DRILL BIT DESIGN**
SYSTEM UND ARCHITEKTUR ZUM VERGLEICHEN UND AUSWÄHLEN EINES BOHRKRONENDESIGNS
SYSTÈME ET ARCHITECTURE POUR COMPARER ET SÉLECTIONNER UNE CONCEPTION DE TRÉPAN

(30) Priority: 25.02.2019 US 201962810135 P
(43) Date of publication of application: 05.01.2022
(73) Proprietor: Services Pétroliers Schlumberger, 75007 Paris (FR); Schlumberger Technology B.V., 2514 JG The Hague (NL)
(72) Inventor: SACHIDANANDAM, Ambalavanan, Houston, TX 77073 (US); DURAIRAJAN, Balasubramanian, Houston, TX 77073 (US); THIRUGNANASAMBANDAM VASUDEVAN Chandsudan, Houston, TX 77073 (US); MASDEA, James, Houston, TX 77073 (US); BIJAI, Rahul, Houston, TX 77073 (US); LIM, Elson, Houston, TX 77073 (US); FANTI, Davide, Houston, TX 77073 (US)
(74) Representative: Schlumberger Intellectual Property Department
(86) International application number: PCT/US2020/019687
(87) International publication number: WO 2020/176494

(56) References cited:
- US-A1- 2005 236 184
- US-A1- 2007 021 857
- US-A1- 2008 125 981
- US-A1- 2015 073 760
- US-A1- 2018 088 552
- No further relevant documents disclosed

## Description

### CROSS-REFERENCE TO RELATED APPLICATIONS

This application claims priority to, and the benefit of U.S. Patent Application No. 62/810,135, filed February 25, 2019.

### BACKGROUND

Wellbores may be drilled into a surface location or seabed for a variety of exploratory or extraction purposes. For example, a wellbore may be drilled to access fluids, such as liquid and gaseous hydrocarbons, stored in subterranean formations and to extract the fluids from the formations. Wellbores used to produce or extract fluids may be lined with casing around the walls of the wellbore. A variety of drilling methods may be utilized depending partly on the characteristics of the formation through which the wellbore is drilled.

During drilling of a wellbore, drill bits that include cutting elements are used to remove material from the earth to create or extend the wellbore. Drill bits of a wide variety of types and sizes may be used. For instance, fixed cutter bits include polycrystalline diamond cutting elements brazed within pockets of fixed blades. The polycrystalline diamond cutting elements traditionally have a planar cutting face that is used to shear the formation as the drill bit is rotated. Roller cone bits include cutting elements connected to, or integral with, a rotating cone on the cutting tool. As the drill bit rotates, each cone rotates about a cone axis to present different cutting elements that scrape and cut the formation to form the wellbore. Other examples of drill bits include impregnated drill bits, and coring bits. Hybrids of the various types of bits may also be used.

The formation being drilled, the application (e.g., straight hole or directional), and other factors may influence the type of drill bit being used. Within each type of drill bit, different designs may also have different characteristics, including on the efficiency of the bit, the durability of the bit, and the impact it has to other tools (e.g., through vibration). Often, these characteristics are interrelated. US 2005/0236184 A1 discloses a software system adapted to be stored in a computer system for providing automatic drill bit selection based on Earth properties.

### BRIEF DESCRIPTION OF DRAWINGS

In order to describe the manner in which features of embodiments of the present disclosure can be obtained, a more particular description will be rendered by reference to specific embodiments thereof, which are illustrated in the appended drawings. For better understanding, the like elements have been designated by like reference numbers throughout the various accompanying figures. While some of the drawings may be schematic or exaggerated representations of concepts, non-schematic drawings should be considered as being to scale for some embodiments of the present disclosure. Understanding that the drawings depict some example embodiments, the embodiments will be described and explained with additional specificity and detail through the use of the accompanying drawings in which:
FIG. 1 illustrates an example architecture for indexing and selecting a downhole tool, according to embodiments of the present disclosure;
FIG. 2 illustrates an example user interface generated by the architecture of FIG. 1 for initial selection of a bit type and workflow;
FIG. 3 illustrates an example user interface generated by the architecture of FIG. 1 for display of the selected baseline and sorted other bits identified via the architecture;
FIG. 4 illustrates an example user interface generated by the architecture of FIG. 1 for display of the selected baseline with inventory and recorded run sorting of other bits;
FIG. 5 illustrates an example user interface generated by the architecture of FIG. 1 for display of one or more families of bit information;
FIG. 6 illustrates an example user interface generated by the architecture of FIG. 1 for display of a search status pane;
FIG. 7 illustrates an example of options available from the search status pane of FIG. 6;
FIG. 8 illustrates an example user interface for comparison of multiple families selected from the search status pane of FIG. 6;
FIG. 9 illustrates an example of a user interface for a view of inventory from the search status pane of FIG. 6;
FIG. 10 illustrates an example of a portion of a user interface for filtering views of displayed search results;
FIG. 11 illustrates an example of a user interface with a comparison of bit BOMs within a bit family;
FIG. 12 illustrates an example of a user interface with a comparison of bit features;
FIG. 13 illustrates an example of a user interface for selection of features to sort bits displayed on the user interface;
FIG. 14 illustrates an example of a user interface with bits sorted and displayed on the user interface based on a reference and bit availability; and
FIG. 15 illustrates an example of a user interface of the architecture to receive user feedback.

### DETAILED DESCRIPTION

Selection of drill bits can be done locally, based on the criteria that is application-specific and based on the geology being drilled and the drilling methods that are used. Knowledge of the application, geology, and drilling methods are thus utilized to effectively select a drill bit. Existing validation and verification methods allow a handful of bits to be simulated in a given environment and rely on the local experts to select the products to be simulated. In several situations, it may be easier to design a new product rather than select an existing product because of the multi-parameter optimization that needs to be done. Creation of many new products can lead to a fragmented product line that is difficult to manage and maintain.

According to some embodiments, fragmentation can be minimized by building individual models that are refined by the current experts using real time or historical run data and then applied to the existing fleet of inventory or designs based on the need. This architecture described herein can then return a series of products that are best fit for the application, thereby reducing the amount of expertise and time taken to arrive at a short list of bits that can then potentially be verified using simulation or standard validation and verification methods.

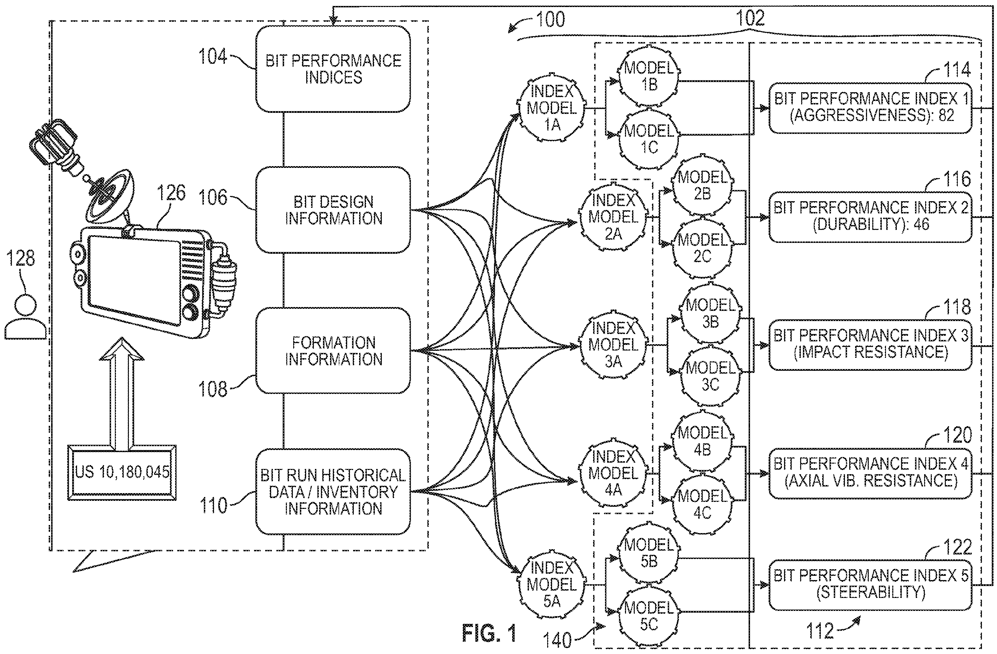

FIG. 1 illustrates an example architecture 100 of the present disclosure. A first phase or step of this model can include using a regression model 102 (e.g., linear, parametric, etc.) to calculate a performance index 104 for fixed cutter, roller cone, impregnated, coring, percussion hammer, or other types of drill bits. Using this model 102, information such as the bit design information 106 (e.g., cutting element types, cutting element placement and orientation, bit size, nozzle positioning, etc.) can be combined with formation information 108, and past bit run information 110 can be input into the regression or other model 102.

When using this model 102, a set of numbers for various performance factors 112 can be output to predict performance of a drill bit compared to existing baselines. In some embodiments, baselines may be selected on or provided to a computing device 126 as discussed and known to the assignee of the current application, such as those disclosed in U.S. Pat. No. 10,180,045. Examples of performance factors include cutting aggressiveness 114, bit durability 116, impact resistance 118, axial vibration resistance 120, steerability 122, and the like. Additional examples of performance factors may include, but are not limited to lateral vibration resistance, torsional vibration resistance, cost, repairability, balling resistance, and erosion resistance, among others.

The model 102 may be static or dynamic, and may output performance factors 112 that are fixed, variable, or even run in real time. For instance, the architecture can be implemented to dynamically and locally calculate performance factors based on the set of input parameters that include any of bit design geometry, material of the bit, cutting element shape/type, expected drilling formation, drilling application, historical bit run information, and the like. In some embodiments, the architecture can be implemented to dynamically and locally calculate performance factors based on input parameters that utilize performance and sales bulletins associated with a particular product (e.g., BOM), bit family, or product feature. Using these models, the software can locally output performance factors 112 relevant to a particular location or field. As the software is deployed, this model can be updated manually or automatically. For instance, a machine learning model such as Artificial Neural Network can be used to improve the success of the performance index models 102.

While performance index models 102 may be locally relevant because of application and formation inputs, improvements can be made to refine the model 102 to be even more geographically relevant. For instance, a next step of this architecture 100 can include refining the model by using local models. A local model 140 may be applied for each geography or basin, to allow predictions of performance factors 112 to be more accurate at a local level. For instance, different drilling conditions exist in the Permian basin as compared to the Ghawar, the Bakken, or the Jupiter oil fields. Accordingly, using local models corresponding to different basins may result in different performance factors 112 for the same bit in each basin.

It is also expected that the prediction of performance factors 112 will be more accurate if a drilling objective or drilling application is used to refine the model. For instance, different conditions may exist when the drilling application is drilling a straight wellbore, primary hole wellbore, drilling a lateral wellbore, or drilling a wellbore section with casing/liner. In each case, models 140 may be developed that are location or application/objective-based to refine the performance factor output 112. Accordingly, while FIG. 1 illustrates selection between different local models 140, another embodiment considered is applying multiple local models.

The architecture 100 described and illustrated relative to FIG. 1 provides, in some embodiments, significant improvements in the selection of a drill bit or other downhole tool for a specific drilling application, geography, or the like. For instance, rather than relying on predefined bit indices created and stored at a server, the use of algorithms to calculate bit indices 112 allows geographically or drilling application specific results that can be calculated or determined at a local device, thereby allowing results to be updated for specific, desired conditions. Accordingly, while various features of the bit and formation may be input, it may be seen from the regression analysis that some features are not statistically relevant for certain conditions or drilling applications. For instance, the aggressiveness of a bit in one drilling application/geography may be heavily weighted based on the cutter configuration (e.g., size, shape, count, angle, redundancy, etc.) in one part of the bit (e.g., shoulder/gauge), while in another drilling application/geography the aggressiveness may apply a higher weight to cutter configuration in another part of the bit (e.g., cone/nose). Similar conditions may exist for computing other performance factors 112, such as wear index, impact resistance, vibration resistance, and the like.

Although the present application considers use of the index or local models as being run on the local device 126, some or all information may be stored on a server or at a location between or otherwise accessible to the server and/or local computing device. FIG. 1, for instance, includes boxes illustrating components (e.g., performance index models 102) that are run on the local device 126. In this embodiment, the bit design information 106, formation information 108, and bit run historical information or inventory information 110 may be stored on the local device 126 or a server in communication with the local device. The index models 102 may be run on a server or other computing device, and may provide information that is then run through local models 140 that are also stored on the local computing device 126. The resulting bit performance indices 104 are computed and displayed on the local device 126. Of course, in the same or other embodiments, information from a server or other location may be accessed (e.g., formation information 108, bit run historical data 110, inventory information 110, bit design information 106, etc.), local models 140 may be stored centrally, or index models 102 may be stored locally. In some embodiments, performance and sales bulletins associated with a particular product (e.g., BOM), bit family, or product feature that are stored by a user on a local device 126 may be provided to the server for use by other local devices in communication with the server.

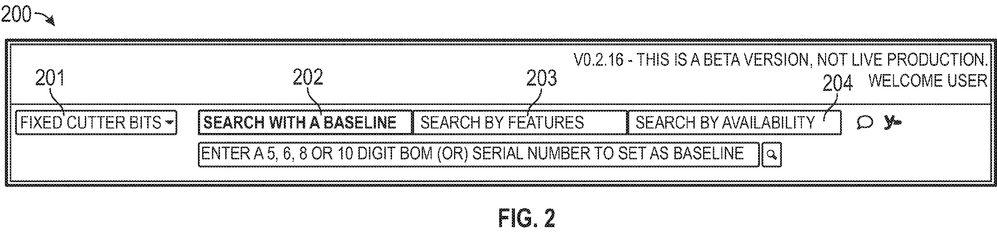

When a local application of the architecture 100 (i.e., remote from a central computing device or server) is executed on the local device 126 (e.g., desktop computing device, laptop computing device, tablet computing device, mobile device), a user 128 may provide information that is used to compute the bit indices 104 used in selection of a bit. For instance, the user 128 may provide information relating to the drilling application, the geography, the local models 140 to be used, and the like. FIGS. 2-15 illustrate some example user interfaces that may be used in the architecture of FIG. 1 to identify, index, and select an example downhole tool (e.g., a drill bit).

In FIG. 2, a user may initiate the process of reviewing various bit designs. For instance, a user interface 200 is provided to allow a user to initially select a bit type at 201. As discussed herein, example types of bits include fixed cutter bits (PDC Bits), roller cone bits, percussion hammer bits, impregnated bits, hole openers, dual diameter bits, or hybrid bits combining features of the foregoing. A user may also be able to choose a particular workflow to use when selecting a bit. In some embodiments, all users have the same workflow options; however, in other embodiments, workflows may be limited based on the identity or role of the user. By way of illustration, the user may be able to select from various (e.g., one, two, three, or more) workflows, including searching with a baseline bit 202, searching by bit features 203, or searching by availability 204. A product engineer, sales representative, design engineer, or other user may have access to each of these three workflows 202-204. In other embodiments, however, one or more of these workflows may be limited. As an example, the ability to search with a baseline bit may be limited to a product or design engineer. In such embodiment, this workflow may be grayed out or removed entirely when a user having a different role accesses the interface of FIG. 2. Examples of these workflows are provided in more detail in the description below.

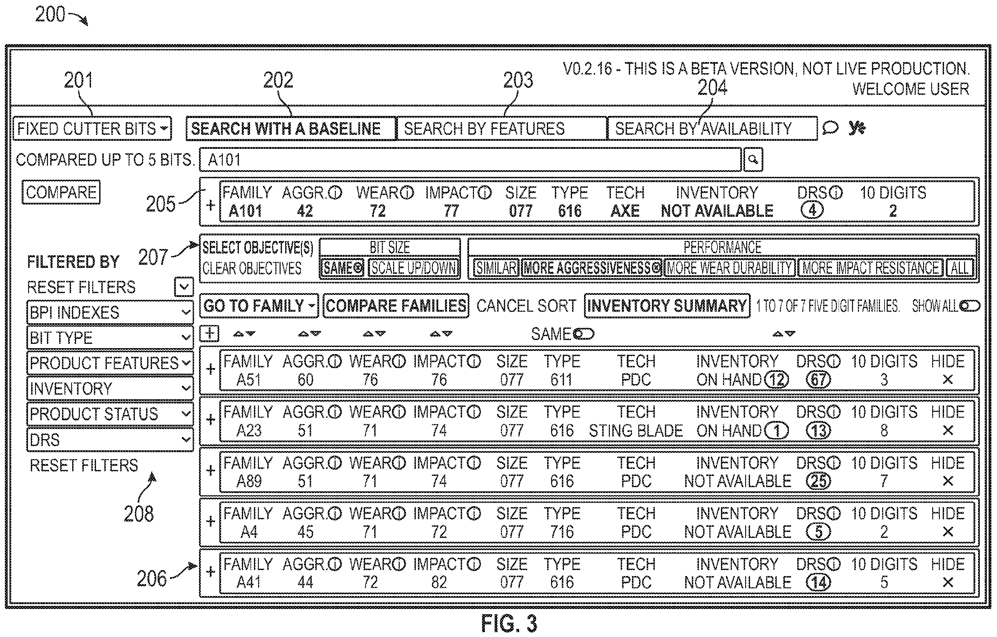

In an example of the interface 200 used to search based on a baseline, the user may enter a description or identifier associated with a baseline bit. For instance, in FIG. 3, the term or product name "A101" may be used to reference a known bit. This allows indices for the baseline bit to be computed (e.g., using index and local models) and displayed at 205. In this particular embodiment, the bit baseline or bit family is displayed at 205, along with indices representing bit aggressiveness, wear resistance, and impact resistance. Other or additional indices may also be calculated. Other information that may further be displayed at 205 may not be index-based. For instance, the bit size (e.g., gauge diameter), bit type (e.g., number of blades), bit or cutter technology (e.g., shear cutters, non-planar cutters, etc.), and inventory status may be illustrated. Further information on the bit family may include the number of previous runs for which data has been recorded (e.g., DRS number) and the number of different bills of materials or specific products fall within the family (e.g., 10-digit number). In some embodiments, the information displayed for one or more of the bits or tools is preexisting and retrieved from a memory storage device. In some embodiments, the information displayed for one or more of the bits or tools is dynamically determined. Accordingly, the architecture described herein may request simulations from other programs to dynamically determine information (e.g., indices) for bits or tools that is to be displayed via the user interface 200.

In addition to the baseline bit that is provided, other information may be computed and displayed. For instance, additional, comparable bits may be displayed at 206. In this embodiment, five additional bits can be displayed based on comparison criteria/objectives specified at 207. In this particular case, the comparison at 207 indicates that bits of the same size should be used, although other options to have a larger or smaller bit are also available. Additionally, for performance, it is selected to have bits of higher aggressiveness be displayed. Other options that can be cumulatively or alternatively selected are performance characteristics related to wear durability/resistance, impact resistance, vibration resistance, etc.

With the objectives selected at 207, available existing bit designs can be evaluated using the index and local models. Bits of the same size and higher aggressiveness (in this embodiment) can then be displayed at 206. As shown, each listed bit has a size of 077 which is equal to that of the baseline bit, and an aggressiveness index that is at least the 42 computed for the baseline bit. In addition to aggressiveness, other information including wear resistance, impact resistance, and the other categories of information displayed for the baseline bit can be provided for the comparison bits displayed at 206.

Any or each of the comparison drill bits may also be hidden in one or more manners. For instance, in the comparison field at 206, an option is provided to hide an individual bit. Additionally, at 208, any of various filters may be applied. Example filters include the bit type, bit technology, product features, inventory numbers or status, product status (e.g., active, inactive, decommissioned, etc.), available historical run data (DRS), or other filters.

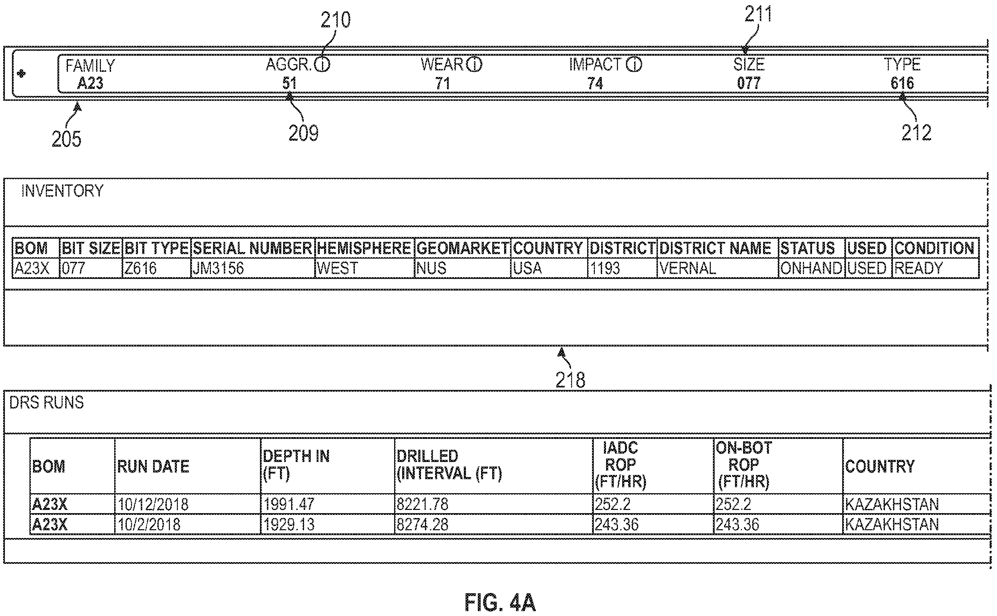

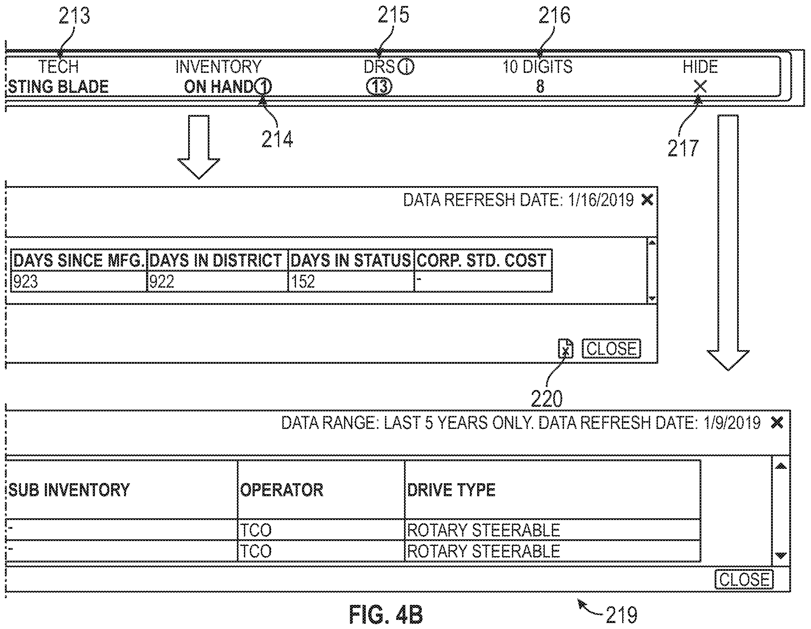

FIG. 4 illustrates another example of aspects of the user interface 200, including the baseline bit indices 205. As shown, the user interface can display the family along with various indices for the bit family. For any or each such index, the index value 209 may be shown, along with an optional indicator 210 (e.g., icon) that can be used to display additional information about the particular index. Example information may include what index models or local models are being run, any algorithms being run, what the inputs are for the index, and the like. As discussed above, other information may include information on the bit size 211, bit type 212 (e.g., blade number, bit profile, cutting element size, etc.), technology employed on the bit 213, information on the available inventory 214 (e.g., whether any bits are available and optionally the number available), number of available historical runs available 215, number of bits in the family that have filters applied 216 (e.g., number of 10-digit BOMs available), and an option to hide the bit family from the user interface 217.

Optionally, some or all of the information may be selected to obtain further information. For instance, by selecting certain information (e.g., highlighted information, circled information, etc.) such as the inventory numbers 214 and historical run information 215, further information may be displayed to show the bits that are available at 218 or the runs that have been recorded at 219. For any or all of the information, options to export 220, email, save, or otherwise later access or share the information may also be included in one or more interfaces.

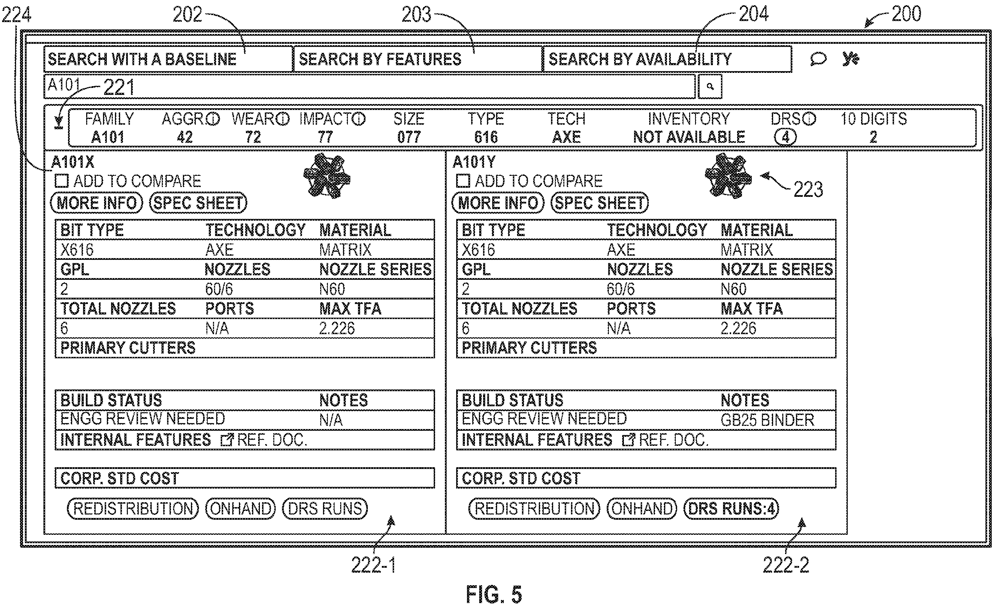

As illustrated in FIG. 5, when the interface 200 displays one or more families of bit information, a user may also be provided with options to interact with particular bit families to obtain more information on the family or on bits within the family. For instance, the user may select an expand option 221 to selectively expand or collapse to see additional bit-level information. In FIG. 5, for instance, the A101 family has 2 available bits (as represented by the 10-digit information). When the family is expanded, bit description panes 222-1, 222-2 can be displayed to show further information on each bit within the family. As shown, some of the information may be the same or similar to what is shown in the baseline bit index 205, including bit type, technology, and the like. More detailed information may also be available about the bit material, nozzles, flow areas, ports, cutter types and sizes, manufacturing status, internal features, and costs. Linked documents (build sheets, detailed spec sheets, etc.) can also be linked to the bit description panes 222-1, 222-2. Further, if any bits are available in inventory, have DRS runs, or have been repaired, that information may also be listed in the panes 222-1, 222-2. Information that is unavailable may not be displayed or may be inactive (e.g., grayed out), while available information may be highlighted, displayed, or even linked. For instance, by selecting "DRS runs: 4" from pane 222-2, the list of historical runs may be displayed, similar to that shown at 219 in FIG. 4.

The panes 222-1, 222-2 also optionally include images 223 of one or more of the bits in a bit family. In some cases, the images 223 may be selected. For instance, once selected, the enlarged views of the face and side views of a bit, an image of the composite cutting profile, or other features of the bit may be displayed. Options to select bits for comparison purposes may also be provided at 224.

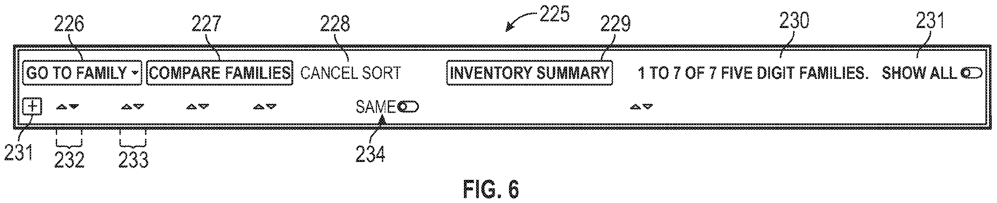

When a search is performed, the user interface 200 may include a search status pane 225 that includes, in some embodiments, the features shown in FIG. 6. In the illustrated embodiment, the search status pane allows a user to browse to a selected family at 226, compare multiple families at 227, or cancel any search or sorting options at 228. Another option that may be available is to see inventory at 229, which may include only the bits that were returned by the search and which are available in inventory, or may include all bits with an indication of whether they are available in inventory or not, what status bits in production may be in, and potentially how many bits are available or a forecast of available bits.

The search status pane 225 may also provide other options including an indication of how many search results were found at 230. If the search results are filtered, or if more than a maximum for a single page are displayed, another option may be to show all bits to override the page maximum or de-apply any filters at 231. Of course, any number of filters or sorting options may also be used. For instance, all bit families in a search result may be expanded at 231, sorted by descending order 232, sorted by ascending order 233, or to filter the results to see the same type of search results at 234.

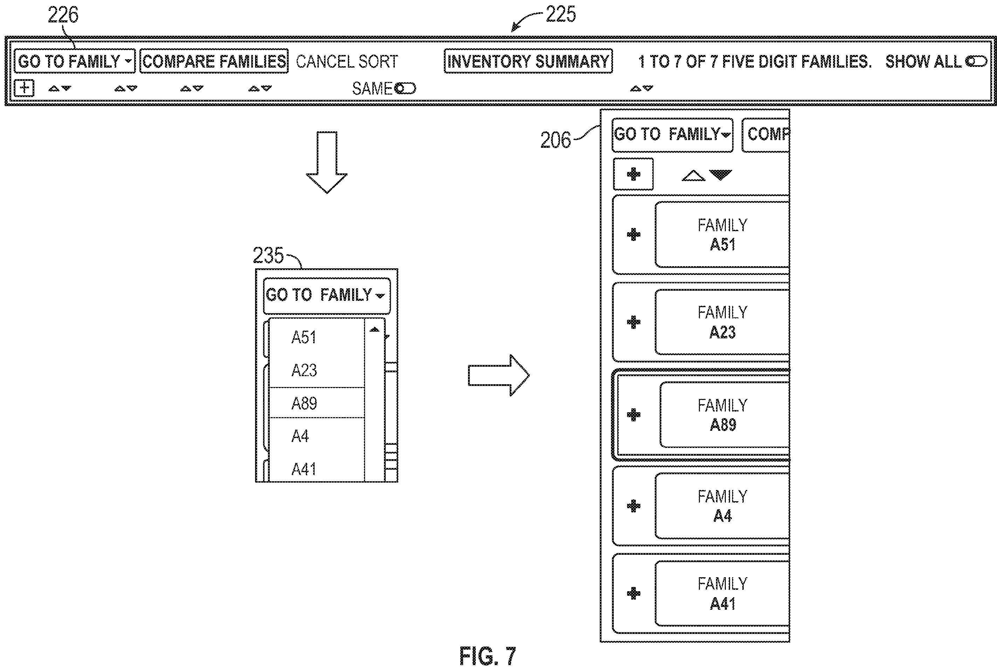

Some of the options available from the search status pane 225 are further shown in FIG. 7. For instance, if the option to browse a family is shown at 226, a drop-down list at 235 may show available families. One or more selected families from the list at 235 may then be presented on the user interface 200 at 206.

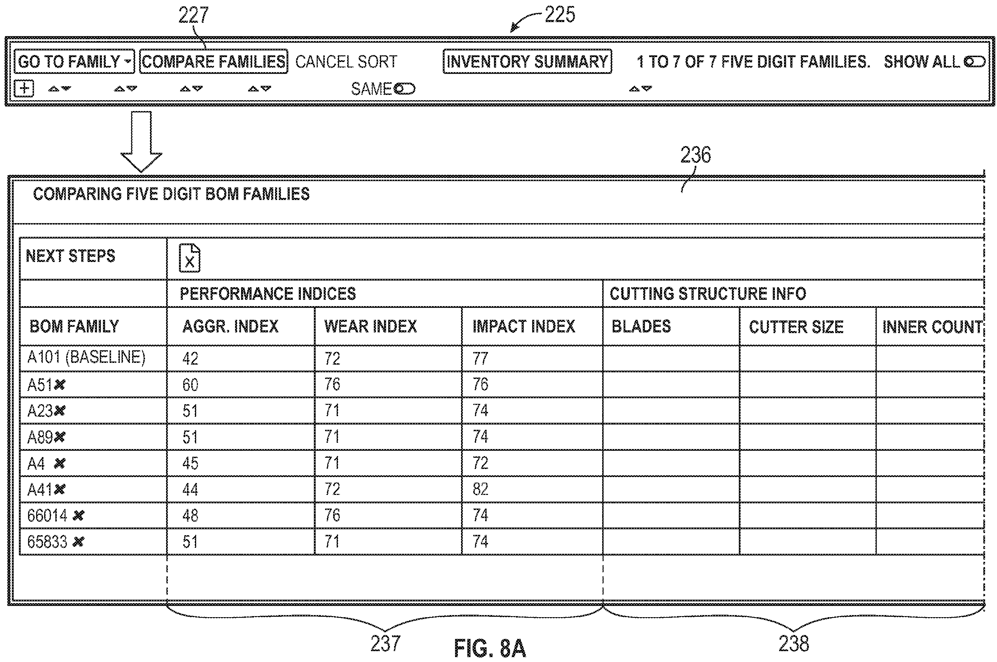

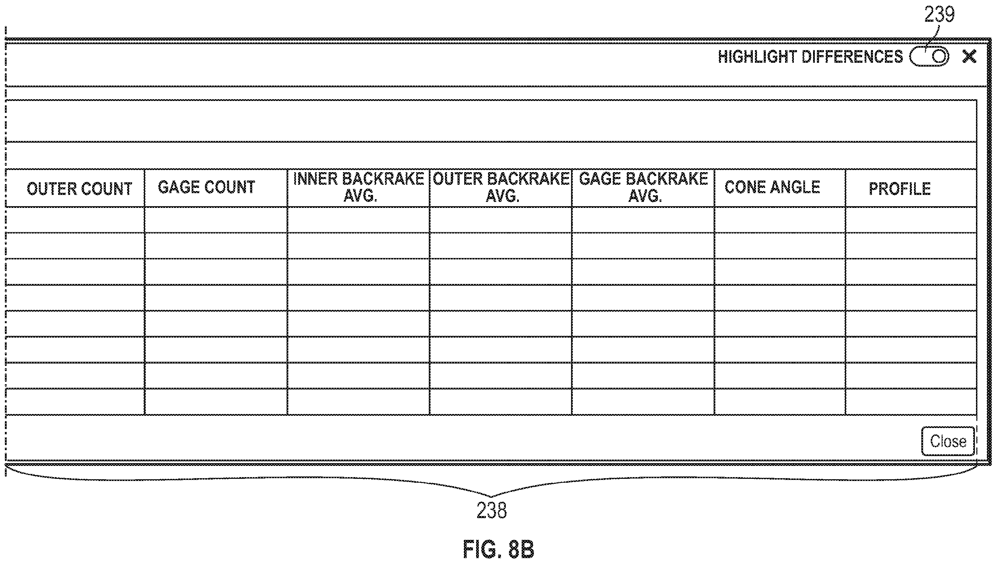

As described above with respect to FIG. 6, when a search is performed, the user interface may include a search pane 225 that includes a feature 227 allowing comparison of multiple families. FIG. 8 illustrates an example of how this may be done in accordance with some embodiments of the present disclosure. When multiple families are selected at 227, the multiple families can be displayed at 236, along with various types of information. In FIG. 8, for instance, the baseline bit family may be shown along with multiple other families. The information that is displayed includes, in this embodiment, index information 237 and physical information 238. The illustrated index information includes information about how the bit performs, including bit aggressiveness, wear resistance, impact resistance, and the like. Any suitable index information, including categories discussed herein, may be used. The physical information 238 may describe how the bit is physically structured. Examples of types of information may include the number of blades, the size(s) of cutters used on the bit, the number of cutting elements at inner, outer, or gauge positions on the bit, the average backrake angles for different portions of bits, angle of the cone region of the bit, the cutting element profile, nozzle counts and type, cutting element types, and the like.

To simplify a review of the comparisons across multiple families, information that is the same as the baseline data may be highlighted at 239. For instance, in the table shown in the display 236, the cells that are colored or highlighted are different than the baseline bit family, but those without such coloring have the same index or physical information 237, 238. Additionally, to remove any bit from the comparison, a user may select the "X" or other suitable removal icon or feature for a corresponding bit family. Information may also be exported to a suitable format, including a spreadsheet file.

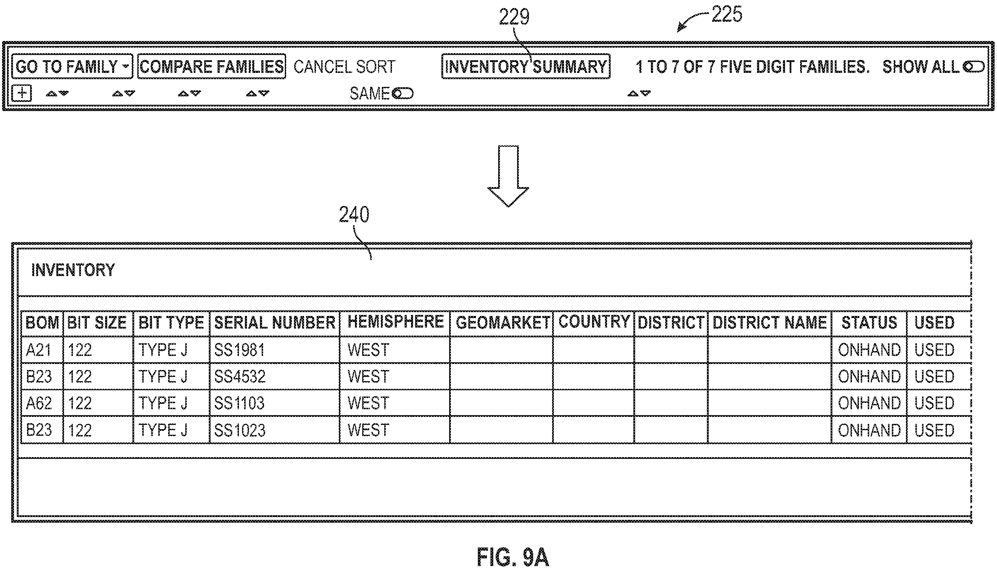

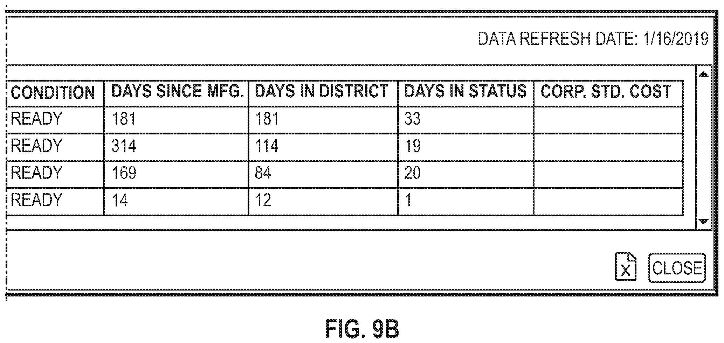

As also described above with respect to FIG. 6, when a search is performed, the user interface may include a search pane 225 that includes a feature 229 allowing a view of inventory. FIG. 9 illustrates an example of how this may be done in accordance with some embodiments of the present disclosure. In this particular example, any bit having a bill of material (BOM) may be displayed at 240, or the results may be filtered (e.g., to include only BOMs with available inventory). The filtered BOMs may also include any bits satisfying a search criteria, or may be associated with a single product family, such as the baseline family. In this particular embodiment, the display 240 shows each bit BOM that has a bit available, including a description of the bit (e.g., size, type, serial number), location (e.g., hemisphere, geographical market where located, country of location, district of location, etc.), and the bit status (e.g., on hand, in process, or awaiting processing), whether the bit is new or used/repaired, if the bit is ready for consumption, how old the bit is, how long it has been at the current location, how long it has been since the bit status has been changed, the bit cost, and the like. As with other displays, the display 240 may be filtered, results may be exported from the display 240, or certain fields may be highlighted to show significant features (e.g., availability).

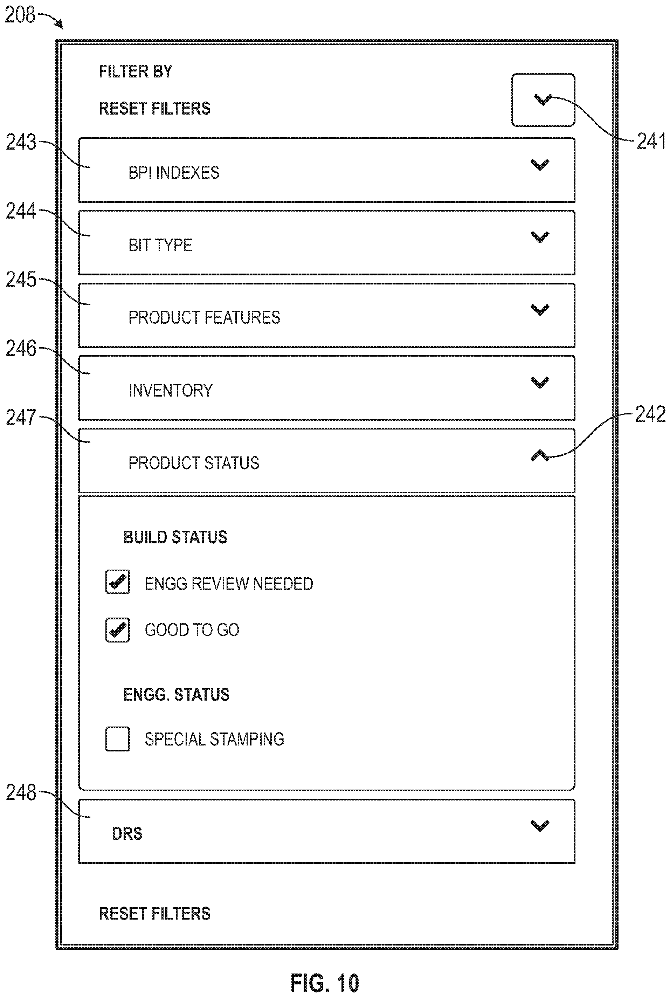

FIG. 10 illustrates an example manner in which results in any of the views herein may be filtered. As discussed with respect to FIG. 3, for instance, any search results may be filtered at 208. The filters 208 may be displayed or hidden in any suitable manner. For instance, options may be selected to expand/collapse some or even all filters at 241, or to expand/collapse individual filters at 242. The specific filters applied may vary, although in the illustrated embodiment filters may be applied based on the results of indexing the bit families at 243, or based on the bit type 244, product features 245, inventory status 246, product status 247, or available field runs at 248.

As shown in the product status option 247, when a filter is expanded, additional options may be displayed and categorized according to filter name or type. In some embodiments, certain filters are pre-selected by default (e.g., all bits where engineering review has been completed and bits that are ready to be manufactured or run), but can be overridden by the user. Sub-filters for any selected filter may also be applied. At any point during use of the filters at 208, a user may apply/remove a filter, reset a particular filter or category of filters, or reset all filters to the default values.

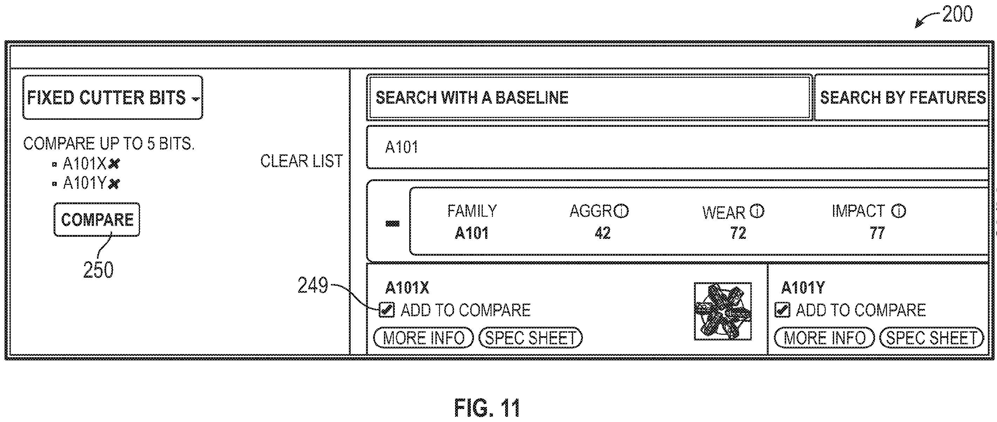

FIG. 11 is another view of the user interface 200 when displaying one or more families of bit information, and is similar to the embodiment of FIG. 5 in that a user may also be provided with options to interact with particular bit families to obtain more information on the family, on bits within the family, or to compare bits. For instance, the user may select an option 249 for a particular bit BOM or bit family, so that the bit family is added to a comparison feature within the interface 200. In the particular embodiment shown in FIG. 11, bit BOMs within the same family are being compared. Once the desired bits are selected for comparison, the bit comparison can be initiated at 250. Comparisons may be initiated automatically when multiple bits are selected, or by user input to initiate (e.g., selecting a button).

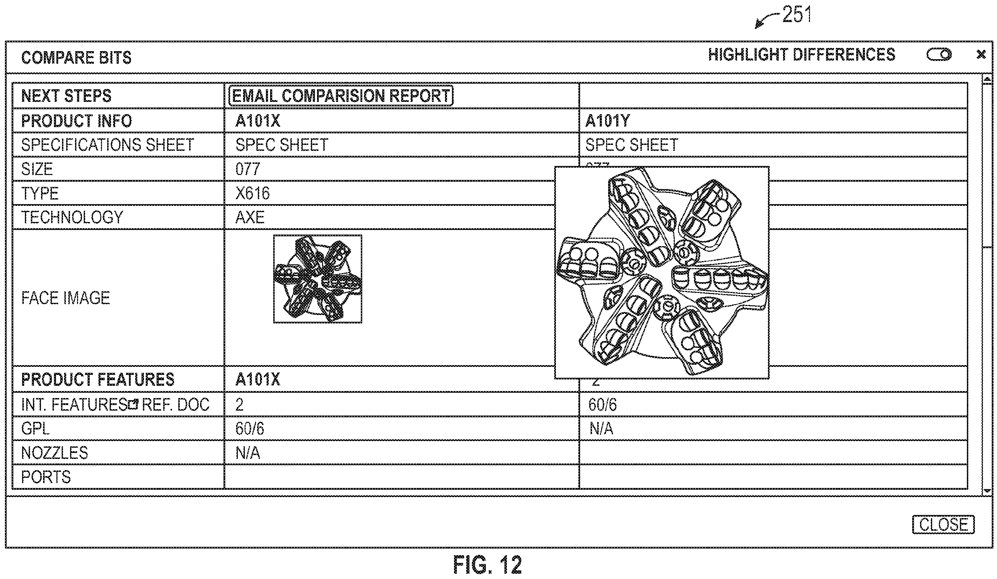

The resulting comparison may then be displayed at 251 as shown in FIG. 12. As with other displays or views of the user interface 200, the comparison may display different features of a selected bit and optionally highlight differences (e.g., a user can turn on/off highlighting). In the particular embodiment shown in FIG. 12, the comparison may include the name of each bit BOM, links to respective spec sheets, and details on the bit size, type (e.g., cutter type), cutter technology, base material technology, nozzle type, nozzle number, nozzle shape, port features, flow rates, recommended drilling fluid types, internal bit features, and the like. As discussed with respect to FIG. 5, photographs, renderings, or other images of a bit may be displayed, and the images may be selected to cycle between different views, to enlarge views, or see more detailed views. In some embodiments, merely moving a cursor or mouse on an image may cause the image to automatically be enlarged.

Of course, other types of information may be displayed. For instance, FIG. 12 shows bits of the same family that may have the same index information. If bits of different families are compared, different index information may be displayed. In some cases, bits within the same family may also have different index information that is displayed.

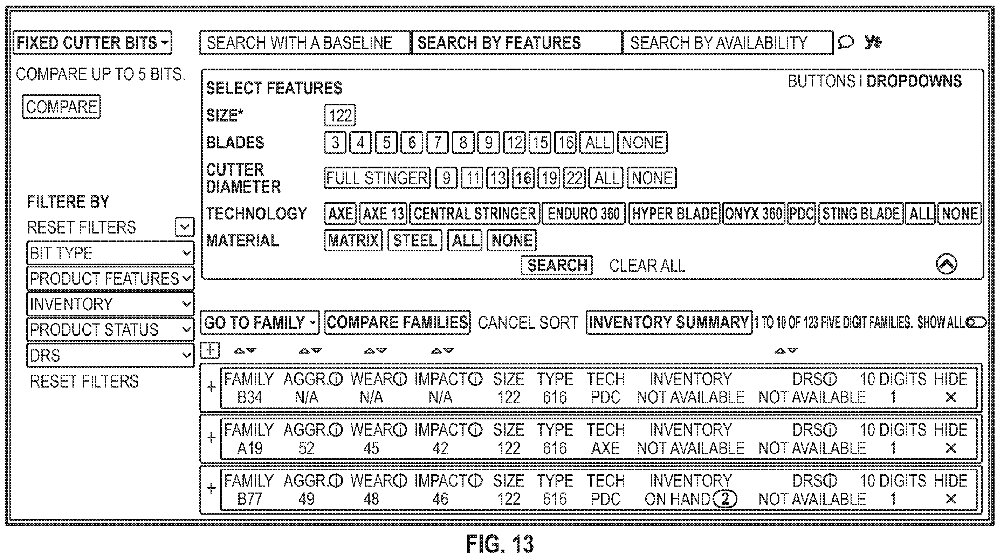

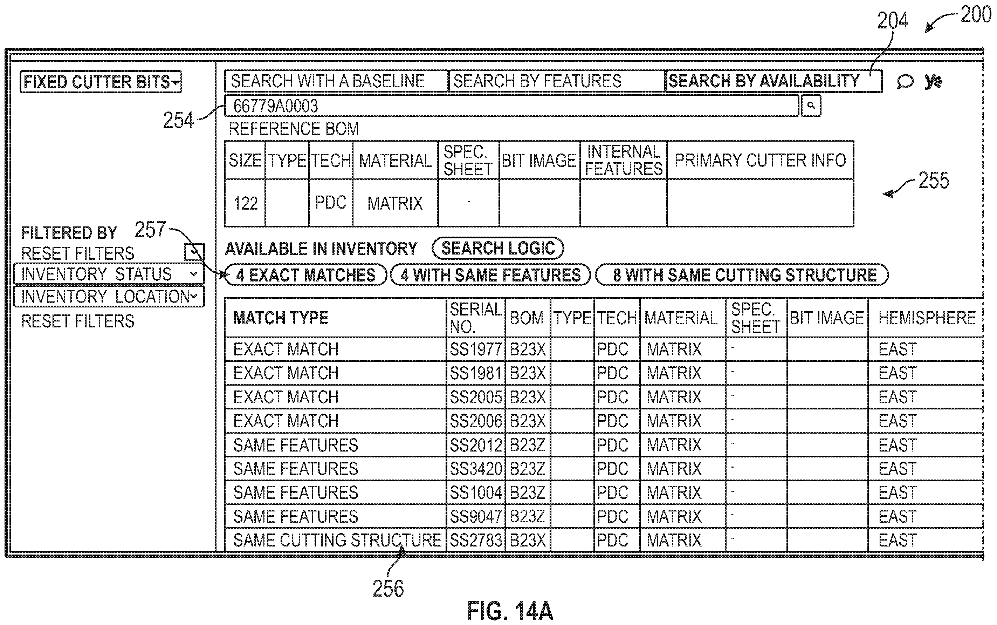

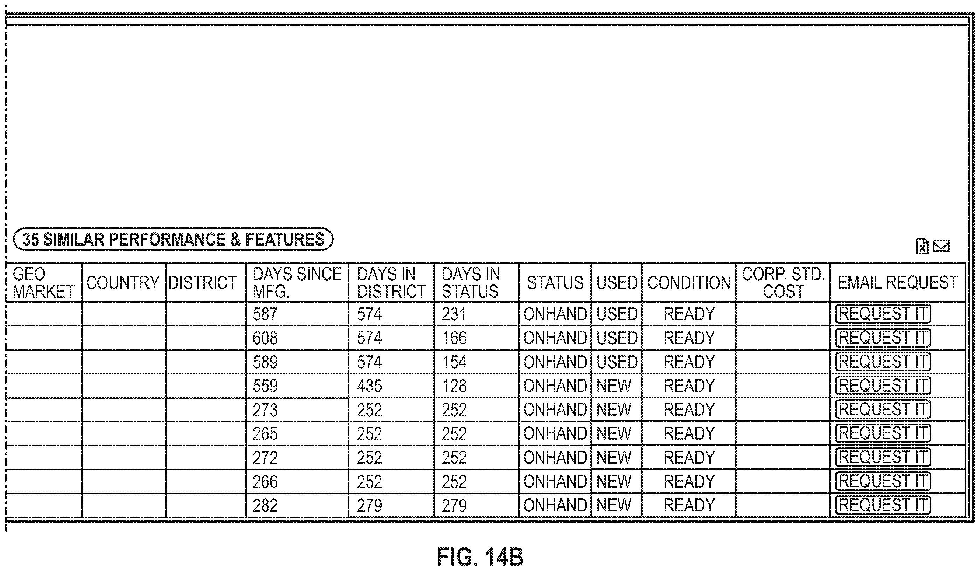

Turning now to FIGS. 13 and 14, additional examples of types of searches that may be performed using the interface 200 are shown and describes in additional detail. In FIG. 13, for instance, a user may search at 252 for drill bits based on product features rather than based on a baseline bit. The illustrated features are examples only, and other types of features may be selected. In this particular, embodiment, however, the bit size, number of blades, cutter size, bit technology (e.g., cutter type or position), and bit material are each examples of features that may be used to populate a search. Available options may be displayed and selected individually, or user input may be provided. Other options may be used to select all options or de-select any/all options.

Once the search criteria are specified, the search can be performed (e.g., by user selection of a search option or automatically as each criteria is selected). Bit families that match the selected criteria may then be displayed at 253. Any number of different types of information may be included, such as the name or identifier for a family and any index information (if available). Physical information about the bit, including the size, bit type, technology, and inventory availability can also be provided. As discussed previously, other information can include the number of prior runs recorded in a database (i.e., DRS), or the number of individual bit designs within the family (i.e., 10 digits).

Other options discussed herein may also be available, such as the ability to hide certain bit families, show all bit families, compare families, go to a specific family, expand/contract a family, obtain summaries of inventory information, or apply filters.

FIG. 14 illustrates an alternative search 204 performed based on availability of a bit. In FIG. 14, the availability of bits is searched by first selecting/inputting a reference drill bit or drill bit family at 254. Information about that reference bit or bit family can then be displayed at 255, and can optionally include information such as the bit size, the type of bit, the cutting element or body technology/materials, links to spec sheets, images (e.g., renderings or photos) of the bit, descriptions of internal features, or information about the cutting element layout. In addition to the specific bit or bit family, information about other drill bits may be displayed in the frame at 256. The illustrated frame includes other drill bits that have been produced and which are available in inventory.

The drill bits listed in frame 256 can be arranged in any of numerous manners. For instance, a first section may show bits that have the same design as the searched drill bit or drill bit family (i.e., Exact Match). Information about these bits, including the serial number, bill of materials, drill bit type, cutting element and body materials and technology, spec sheets, images, and locations may also be provided. Additional information in frame 256 can include a description of when the drill bit was manufactured, how long it has been at the current location, the current bit status, and how long it has been since the bit changed status (e.g., on hand vs. in manufacturing/repair). Whether the bit has been newly produced or repaired may also be displayed, along with a description of the condition and/or cost. Optionally, an input element may further be provided to allow the user of the interface 200 to request the bit, which can email the current location, or generate a purchase order or shipping label.

Other bits other than exact matches may also be displayed. For instance, at 257, the search results include a summary of on hand drill bits and indicates that there are 4 exact matches, 4 bits that have the same features, 8 available bits with the same cutting structure, and 35 bits with similar performance and features. Any of these results may be turned on or off by selecting the corresponding summary. Each type is also listed, with the bits with the same features (but not exact matches) also shown in the frame at 256, along with the same corresponding descriptions of the bit, location, and the like. By scrolling further down the list, the other bits with the same cutting structure (1 is shown in frame 256) and bits with similar performance/features may also be viewed. When a user has identified the bit that should be used, the user can select the `Request It' option to generate the email, purchase order, or shipping label as discussed above.

As with other views or frames within the user interface 200, the availability search at 204 can also include other options. Filtering, comparisons between bits or bit families, exporting, emailing of results, and the like can also be performed in the view shown in FIG. 14, and in any other view regardless of the type of search initiated.

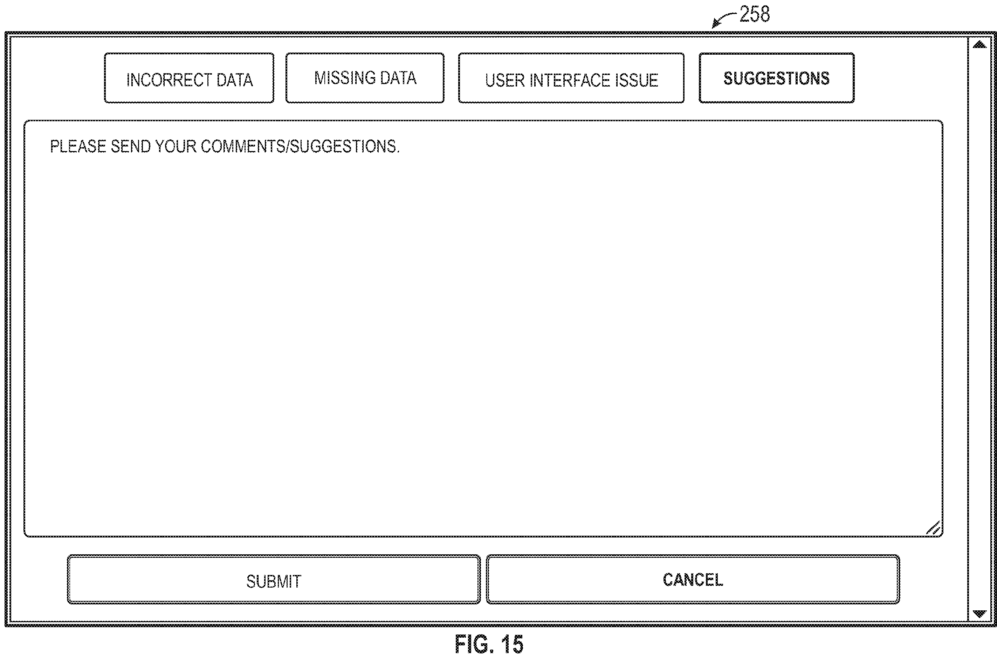

Also available from any view or frame may be the option to send feedback. As shown in FIG. 15, for instance, a view 258 may be generated to allow a user to send feedback to a designer or developer of the interface. Examples of feedback that may be sent include feedback that data is incorrect (e.g. bit or family numbers, descriptions, etc.), feedback that data is missing (e.g., index information, bit descriptions, etc.), error reports, or even feedback about potential design improvements.

Embodiments of the present disclosure include, but are not limited to, computerized or automated methods, systems, and architectures for displaying, filtering, selecting, and ordering drill bits. It should be appreciated that any number of special and general purpose computing devices and processors may be involved, including the architecture described with respect to FIG. 1. Further, while embodiments are described herein with reference to drill bits, the same methods and architecture are applicable to other downhole tools or even tools outside the oilfield. For instance, within the oilfield, reamers, reamer cutting blocks, milling tools, whipstocks, jars, downhole motors, rotary steerable systems, and the like may each be viewed and selected using the methodologies and systems described herein. Outside the oilfield, machining tools, manufacturing equipment, farming equipment, and other tools or equipment may be arranged, categorized, indexed, and selected in similar manners. Additionally, identifying and/or displaying information can include a local request sent to a server for a query, retrieving locally stored information, or calculating information at a local or remote device. For instance, an index model or local model may be provided from a server to a local device, so that the local device can calculate information locally, without pulling all information from the server.

Within the present disclosure, a processor or computing device may include a microprocessor, microcontroller, processor module or subsystem, programmable integrated circuit, programmable gate array, or another control or computing device.

Note that within the example embodiment of FIG. 1, a computing device can include computer-readable media, or performance indices, bit design information, formation information, historical run data, inventory data, index models, or local models may be stored within computer-readable media. Computer-readable media can be distributed within and/or across multiple internal and/or external enclosures of a computing system and/or additional computing systems, as shown in FIG. 1. The computer-readable media may be implemented as one or more computer-readable or machine-readable storage media, transmission media, or a combination of storage and transmission media.

As used herein, "storage media", "computer-readable storage media," and the like refer to physical media that stores software instructions in the form of computer-readable program code that allows performance of embodiments of the present disclosure. "Transmission media", "computer-readable transmission media," and the like refer to non-physical media which carry software instructions in the form of computer-readable program code that allows performance of embodiments of the present disclosure. Thus, by way of example, and not limitation, embodiments of the present disclosure can include at least two distinctly different kinds of computer-readable media, namely storage media and/or transmission media. Combinations of storage media and transmission media should be included within the scope of computer-readable media.

To further illustrate the distinct nature of storage media and transmission media, storage media may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or solid state drives, or other types of storage devices.

Transmission media may conversely include communications networks or other data links that enable the transport of electronic data between computer systems and/or modules, engines, and/or other electronic devices. When information is transferred or provided over a communication network or another communications connection (either hardwired, wireless, or a combination of hardwired or wireless) to a computing device, the computing device properly views the connection as a transmission medium. Transmission media can therefore include a communication network and/or data links, carrier waves, wireless signals, and the like, which can be used to carry desired program, code means, or instructions.

Note that the instructions discussed above may be provided on one computer-readable or machine-readable medium, or may be provided on multiple computer-readable or machine-readable media distributed in a large system having possibly plural nodes. Such computer-readable or machine-readable medium or media is (are) considered to be part of an article (or article of manufacture). An article or article of manufacture may refer to any manufactured single component or multiple components. The computer-readable medium or media may be located either in the machine running the machine-readable instructions, or located at a remote site from which machine-readable instructions may be downloaded over a network for execution. Further, where transmission media is used, upon reaching various computing system components, program code in the form of computer-executable instructions or data structures can be transferred automatically or manually from transmission media to storage media (or vice versa). For example, computer-executable instructions or data structures received over a network or data link can be buffered in memory-type storage media (e.g., RAM) within a network interface module (NIC), and then eventually transferred to computer system RAM and/or to less volatile storage media (e.g., a hard drive) at a computer system. Thus, it should be understood that storage media can be included in computer system components that also (or even primarily) utilize transmission media.

In some embodiments, a computing system or architecture contains one or more modeling or indexing module(s). In some embodiments, a single modeling/indexing module may be used to perform some aspects of one or more embodiments of the methods disclosed herein. In other embodiments, a plurality of modeling/indexing modules may be used to perform some aspects of methods herein.

It should be appreciated that a computing system or architecture as specifically described above is merely one example of a computing system, and that a computing system may have more or fewer components than shown, may combine additional components not depicted in the example embodiment of FIG. 1, and/or a computing system/architecture may have a different configuration or arrangement of the components depicted in FIG. 1. The various components shown in FIG. 1 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion, and this concept is applicable to the methods discussed herein. This may include use of feedback loops executed on an algorithmic basis, such as at a computing device, and/or through manual control by a user who may make determinations regarding whether a given step, action, template, model, or set of index models or local indexes has become sufficiently accurate for the evaluation of a given design.

The terms "couple," "coupled," "connect," "connection," "connected," "in connection with," and "connecting" refer to "in direct connection with" or "in connection with via one or more intermediate elements or members."

Although a few example embodiments have been described in detail above, those skilled in the art will readily appreciate that many modifications are possible in the example embodiments without materially departing from the scope of the present disclosure. The scope of protection is defined by the appended claims.

## Claims

1. A method (100) of selecting a downhole tool for use in a drilling application, comprising:
receiving input indicative of a particular device, device family, or set of features for a downhole tool;
determining a baseline associated with the received input;
identifying, from a set of design information (106) stored in computer-storage media, one or more downhole tool records that correspond to the received input;
applying one or more performance index models (102) to the identified one or more downhole tool records;
applying one or more local models (140) to the identified one or more downhole tool records; and
displaying at least some of the one or more downhole tool records, with index information (237) as defined by the one or more performance index and the one or more local models for selecting a downhole tool for use in a drilling application.

2. The method (100) of claim 1, wherein applying the one or more local models (140) includes receiving the one or more local models from a server and applying the one or more local models at a local device (126).

3. The method (100) of claim 1, wherein displaying at least some of the one or more downhole tool records includes limiting which records are displayed based on whether corresponding index information (237) is similar to, or improved relative to, the baseline associated with the received input.

4. The method (100) of claim 1, wherein displaying at least some of the one or more downhole tool records includes limiting which records are displayed based on whether corresponding physical features (238) are similar to the baseline associated with the received input.

5. The method (100) of claim 1, wherein displaying at least some of the one or more downhole tool records includes limiting which records are displayed based on whether downhole tools corresponding to the one or more downhole tool records are available in inventory (110).

6. The method (100) of claim 1, wherein displaying at least some of the one or more downhole tool records includes limiting which records are displayed based on a number of historical runs (110) recorded for the particular device or device family.

7. The method (100) of claim 1, wherein the particular device is a device bill of materials.

8. The method (100) of claim 1, wherein applying one or more local models (140) includes applying a model specific to a geographic location where the downhole tool will be used.

9. The method (100) of claim 1, wherein applying one or more local models (140) includes applying a model specific to the drilling application in which the downhole tool will be used, wherein the drilling application comprises a straight wellbore, a primary wellbore, a lateral wellbore, or a wellbore drilled with casing/liner.

10. The method (100) of claim 1, wherein applying one or more local models (140) includes applying at least one aggressiveness (114) model and at least one durability (116) model.

11. The method (100) of claim 1, wherein applying one or more performance index models (102) includes updating historical run data (110) in the computer-storage media from a server, and applying the one or more index models to the historical run data to the identified one or more downhole tool records.

12. A computing architecture, comprising:
one or more processors; and
computer-readable storage media including instructions for performing a method of selecting a downhole tool for use in a drilling application, that, when executed by the one or more processors, causes the processor to:
identify, from a set of design information (106) stored in computer-storage media, one or more downhole tool records that correspond to received input, wherein the received input is indicative of a particular device, device family, or set of features for a downhole tool;
determine a baseline associated with the received input;
apply one or more performance index models (102) to the identified one or more downhole tool records;
apply one or more local models (140) to the identified one or more downhole tool records; and
display at least some of the one or more downhole tool records, with index information (237) as defined by the one or more performance index and the one or more local models for selecting a downhole tool for use in a drilling application.

13. The computing architecture of claim 12, wherein the one or more processors are distributed between at least one server and at least one local device (126).

14. The computing architecture of claim 13, wherein the computer-readable storage media comprises a memory media of the at least one local device (126), and one or more local models (140) are stored in the memory media of the at least one local device.

15. The computing architecture of claim 12, wherein the one or more local models (140) includes at least one aggressiveness (114) model and at least one durability (116) model.

## Patentansprüche

1. Ein Verfahren (100) zum Auswählen eines Bohrgeräts zur Verwendung in einer Bohranwendung, das Folgendes umfasst:
Empfangen einer Eingabe, die sich auf ein bestimmtes Gerät, eine bestimmte Gerätefamilie oder einen Satz von Funktionen für ein Bohrgerät bezieht;
Bestimmen eines Ausgangswerts, der mit der empfangenen Eingabe verknüpft ist;
Erkennen einer oder mehrerer Bohrgerätaufzeichnungen, die der empfangenen Eingabe entsprechen, aus einem Satz von Konstruktionsdaten (106), die auf Computerspeichermedien gespeichert sind;
Anwenden eines oder mehrerer Leistungsindexmodelle (102) auf die erkannte eine oder mehr Bohrgerätaufzeichnungen;
Anwenden eines oder mehrerer lokaler Modelle (140) auf die erkannte eine oder mehr Bohrgerätaufzeichnungen; und
Anzeigen von mindestens einem Teil der einen oder mehr Bohrgerätaufzeichnungen, mit Indexinformationen (237), die durch den einen oder die mehreren Leistungsindexe und das eine oder die mehreren lokalen Modelle definiert sind, zum Auswählen eines Bohrgeräts zur Verwendung in einer Bohranwendung.

2. Das Verfahren (100) nach Anspruch 1, wobei das Anwenden des einen oder der mehreren lokalen Modelle (140) das Empfangen des einen oder der mehreren lokalen Modelle aus einem Server und das Anwenden des einen oder der mehreren lokalen Modelle an einem lokalen Gerät (126) einschließt.

3. Das Verfahren (100) nach Anspruch 1, wobei das Anzeigen mindestens eines Teils der Bohrgerätaufzeichnungen auf der Grundlage dessen, ob entsprechende Indexinformationen (237) dem mit der empfangenen Eingabe verknüpften Ausgangswert ähnlich oder bezüglich darauf verbessert sind, eine Einschränkung einschließt, welche Aufzeichnungen angezeigt werden.

4. Das Verfahren (100) nach Anspruch 1, wobei das Anzeigen mindestens eines Teils der einen oder der mehreren Bohrgerätaufzeichnungen auf der Grundlage dessen, ob entsprechende physikalische Merkmale (238) dem mit der empfangenen Eingabe verknüpften Ausgangswert ähnlich sind, eine Einschränkung einschließt, welche Aufzeichnungen angezeigt werden.

5. Das Verfahren (100) nach Anspruch 1, wobei das Anzeigen mindestens eines Teils der einen oder der mehreren Bohrgerätaufzeichnungen auf der Grundlage dessen, ob Bohrgeräte, die der einen oder den mehreren Bohrgerätaufzeichnungen entsprechen, in der Ausrüstung (110) verfügbar sind, eine Einschränkung einschließt, welche Aufzeichnungen angezeigt werden.

6. Das Verfahren (100) nach Anspruch 1, wobei das Anzeigen mindestens eines Teils der einen oder der mehreren Bohrgerätaufzeichnungen auf der Grundlage einer Anzahl von historischen Durchläufen (110), die für das jeweilige Gerät oder die Gerätefamilie aufgezeichnet wurden, eine Einschränkung einschließt, welche Aufzeichnungen angezeigt werden.

7. Das Verfahren (100) nach Anspruch 1, wobei das jeweilige Gerät eine Gerätestückliste ist.

8. Das Verfahren (100) nach Anspruch 1, wobei das Anwenden eines oder mehrerer lokaler Modelle (140) das Anwenden eines Modells einschließt, das für eine geografische Position, an der das Bohrgerät verwendet werden soll, spezifisch ist.

9. Das Verfahren (100) nach Anspruch 1, wobei das Anwenden eines oder mehrerer lokaler Modelle (140) das Anwenden eines Modells einschließt, das für die Bohranwendung, in der das Bohrgerät verwendet werden soll, spezifisch ist, wobei die Bohranwendung ein vertikales Bohrloch, ein Hauptbohrloch, ein laterales Bohrloch oder ein Bohrloch mit Verrohrung/Liner umfasst.

10. Das Verfahren (100) nach Anspruch 1, wobei das Anwenden eines oder mehrerer lokaler Modelle (140) das Anwenden mindestens eines Spitzenlastmodells (114) und mindestens eines Dauerhaftigkeitsmodells (116) umfasst.

11. Das Verfahren (100) nach Anspruch 1, wobei das Anwenden eines oder mehrerer Leistungsindexmodelle (102) das Aktualisieren historischer Prozessdaten (110) auf dem Computerspeichermedium von einem Server aus und das Anwenden des einen oder der mehreren Indexmodelle auf die historischen Prozessdaten auf die eine oder die mehreren erkannten Bohrgerätaufzeichnungen umfasst.

12. Eine Computerarchitektur, die Folgendes umfasst:
einen oder mehrere Prozessoren; und
computerlesbare Speichermedien, einschließlich Anweisungen für das Ausführen eines Verfahrens zum Auswählen eines Bohrgeräts zur Verwendung in einer Bohranwendung, die beim Ausführen durch den einen oder die mehreren Prozessoren den Prozessor zu Folgendem veranlasst:
Erkennen einer oder mehrerer Bohrgerätaufzeichnungen, die der empfangenen Eingabe entsprechen, aus einem Satz von Konstruktionsdaten (106), die auf Computerspeichermedien gespeichert sind, wobei die empfangene Eingabe sich auf ein bestimmtes Gerät, eine bestimmte Gerätefamilie oder einen Satz von Funktionen für ein Bohrgerät bezieht;
Bestimmen eines Ausgangswerts, der mit der empfangenen Eingabe verknüpft ist;
Anwenden eines oder mehrerer Leistungsindexmodelle (102) auf die eine oder die mehreren erkannten Bohrgerätaufzeichnungen;
Anwenden eines oder mehrerer lokaler Modelle (140) auf die eine oder die mehreren erkannten Bohrgerätaufzeichnungen; und
Anzeigen von mindestens einem Teil der einen oder der mehreren Bohrgerätaufzeichnungen, mit Indexinformationen (237), die durch den einen oder die mehreren Leistungsindexe und das eine oder die mehreren lokalen Modelle definiert sind, zum Auswählen eines Bohrgeräts zur Verwendung in einer Bohranwendung.

13. Die Computerarchitektur nach Anspruch 12, wobei der eine oder die mehreren Prozessoren zwischen mindestens einem Server und mindestens einem lokalen Gerät (126) verteilt sind.

14. Die Computerarchitektur nach Anspruch 13, wobei das computerlesbare Speichermedium ein Speichermedium des mindestens einen lokalen Geräts (126) umfasst und ein oder mehrere lokale Modelle (140) im Speichermedium des mindestens einen lokalen Geräts gespeichert sind.

15. Die Computerarchitektur nach Anspruch 12, wobei das eine oder die mehreren lokalen Modelle (140) mindestens ein Spitzenlastmodell (114) und mindestens ein Dauerhaftigkeitsmodell (116) umfassen.

## Revendications

1. Procédé (100) de sélection d'un outil de fond de trou destiné à être utilisé dans une application de forage, comprenant :
la réception d'une entrée indiquant un dispositif particulier, une famille de dispositifs ou un ensemble de caractéristiques pour un outil de fond de trou ;
la détermination d'une référence associée à l'entrée reçue ;
l'identification, à partir d'un ensemble d'informations de conception (106) mémorisées dans un support de mémoire informatique, d'un ou plusieurs enregistrements d'outil de fond de trou correspondant à l'entrée reçue ;
l'application d'un ou plusieurs modèles d'indice de performance (102) à un ou plusieurs enregistrements d'outil de fond de trou identifiés ;
l'application d'un ou de plusieurs modèles locaux (140) au ou aux enregistrements d'outil de fond de trou identifiés ; et
l'affichage d'au moins certains du ou des enregistrements d'outil de fond de trou, avec des informations d'indice (237) telles que définies par le ou les indices de performance et le ou les modèles locaux destinés à sélectionner un outil de fond de trou destiné à être utilisé dans une application de forage.

2. Procédé (100) selon la revendication 1, dans lequel l'application du ou des modèles locaux (140) comporte la réception du ou des modèles locaux provenant d'un serveur et l'application du ou des modèles locaux au niveau d'un dispositif local (126).

3. Procédé (100) selon la revendication 1, dans lequel l'affichage d'au moins certains du ou des enregistrements d'outil de fond de trou comporte la limitation des enregistrements qui sont affichés sur la base du fait que les informations d'indice correspondantes (237) ou non sont similaires ou améliorées par rapport à la base de référence associée à l'entrée reçue.

4. Procédé (100) selon la revendication 1, dans lequel l'affichage d'au moins certains du ou des enregistrements d'outil de fond de trou comporte la limitation des enregistrements qui sont affichés sur la base du fait que les caractéristiques physiques correspondantes (238) ou non sont similaires à la base de référence associée à l'entrée reçue.

5. Procédé (100) selon la revendication 1, dans lequel l'affichage d'au moins certains du ou des enregistrements d'outil de fond de trou comporte la limitation des enregistrements qui sont affichés sur la base du fait que des outils de fond de trou correspondants ou non au ou aux enregistrements d'outil de fond de trou sont ou non disponibles en inventaire (110).

6. Procédé (100) selon la revendication 1, dans lequel l'affichage d'au moins certains du ou des enregistrements d'outil de fond de trou comporte la limitation des enregistrements qui sont affichés sur la base d'un certain nombre d'exécutions historiques (110) enregistrés pour le dispositif particulier ou la famille de dispositifs.

7. Procédé (100) selon la revendication 1, dans lequel le dispositif particulier est une nomenclature de matériaux du dispositif.

8. Procédé (100) selon la revendication 1, dans lequel l'application d'un ou plusieurs modèles locaux (140) comporte l'application d'un modèle spécifique à un emplacement géographique où l'outil de fond de trou sera utilisé.

9. Procédé (100) selon la revendication 1, dans lequel l'application d'un ou plusieurs modèles locaux (140) comporte l'application d'un modèle spécifique à l'application de forage dans laquelle l'outil de fond de trou sera utilisé, dans lequel l'application de forage comprend un puits de forage droit, un puits de forage primaire, un puits de forage latéral ou un puits de forage foré avec tubage/colonne perdue.

10. Procédé (100) selon la revendication 1, dans lequel l'application d'un ou plusieurs modèles locaux (140) comporte l'application d'au moins un modèle d'agressivité (114) et d'au moins un modèle de durabilité (116).

11. Procédé (100) selon la revendication 1, dans lequel l'application d'un ou plusieurs modèles d'indice de performance (102) comporte la mise à jour de données d'exécution historiques (110) dans le support de mémoire informatique provenant d'un serveur, et l'application du ou des modèles d'indice aux données d'exécution historique au ou aux enregistrements d'outil de fond de trou identifiés.

12. Architecture informatique, comprenant :
un ou plusieurs processeurs ; et
support de mémoire lisible par ordinateur comportant des instructions destinées à la réalisation d'un procédé de sélection d'un outil de fond de trou destiné à être utilisé dans une application de forage, qui, lorsqu'il est exécuté par le ou les processeurs, amène le processeur à :
identifier, à partir d'un ensemble d'informations de conception (106) mémorisées dans un support de mémoire informatique, un ou plusieurs enregistrements d'outil de fond de trou qui correspondent à une entrée reçue, dans lequel l'entrée reçue indiquant un dispositif particulier, une famille de dispositifs ou un ensemble de caractéristiques pour un outil de fond de trou ;
déterminer une référence associée à l'entrée reçue ;
appliquer un ou plusieurs modèles d'indice de performance (102) à un ou plusieurs enregistrements d'outil de fond de trou identifiés ;
appliquer un ou plusieurs modèles locaux (140) au ou aux enregistrements d'outil de fond de trou identifiés ; et
afficher au moins certains du ou des enregistrements d'outil de fond de trou, avec des informations d'indice (237) telles que définies par le ou les indices de performance et le ou les modèles locaux pour sélectionner un outil de fond de trou destiné à être utilisé dans une application de forage.

13. Architecture informatique selon la revendication 12, dans laquelle le ou les processeurs sont distribués entre au moins un serveur et au moins un dispositif local (126).

14. Architecture informatique selon la revendication 13, dans laquelle le support de mémoire lisible par ordinateur comprend un support de mémoire dudit au moins un dispositif local (126), et un ou plusieurs modèles locaux
(140) sont mémorisés dans le support de mémoire dudit au moins un dispositif local.

15. Architecture informatique selon la revendication 12, dans laquelle le ou les modèles locaux (140) comportent au moins un modèle d'agressivité (114) et au moins un modèle de durabilité (116).
